# EUROPÄISCHE PATENTSCHRIFT

(11) **EP 1 614 610 B1**
(45) Veröffentlichungstag und Bekanntmachung des Hinweises auf die Patenterteilung: **07.06.2006**
(21) Anmeldenummer: 04015942.8
(22) Anmeldetag: 07.07.2004
(51) Int. Cl.: B62D 29/04

(54) **Kraftfahrzeugunterbodenverkleidung sowie Verfahren zum Herstellen einer solchen**
Vehicle underbody cowling und manufactury process therefor
Habillage de bas de caisse de véhicule automobile, et procédé de fabrication d'un tel habillage

(43) Veröffentlichungstag der Anmeldung: 11.01.2006
(73) Patentinhaber: ICOS GmbH, 38228 Salzgitter (DE)
(72) Erfinder: Schatz, Stefan, 37085 Göttingen (DE); Kelpe, Hans-Rudolf, 31249 Hohenhameln (DE); Stellmach, Hans-Jügen, 38315 Schladen (DE)
(74) Vertreter: Stoffregen, Hans-Herbert

(56) Entgegenhaltungen:
- EP-A- 1 362 886
- DE-A- 19 817 567
- US-A1- 2002 160 204

## Beschreibung

Die Erfindung bezieht sich auf eine Kraftfahrzeugunterbodenverkleidung im Wesentlichen flächiger Erstreckung mit strukturierten Bereichen zur Erhöhung der Festigkeit und/oder zum Befestigen am Kraftfahrzeug, wobei Grundwerkstoff der Unterbodenverkleidung Polypropylen ist, dem zumindest ein Dichte, Biege-Elastizitätsmodul und/oder Kerbschlagzähigkeit der Unterbodenverkleidung beeinflussendes Additiv zugegeben ist. Auch nimmt die Erfindung Bezug auf ein Verfahren zur Herstellung einer aerodynamisch ausgelegten Kraftfahrzeugunterbodenverkleidung im Wesentlichen flächiger Erstreckung mit strukturierten Bereichen zur Erhöhung der Festigkeit und/oder zum Befestigen am Kraftfahrzeug unter Verwendung von Polypropylen als Grundwerkstoff.

Im verstärkten Umfang werden im Automobilbereich Karosserieteile aus Kunststoff verwendet. So ist es bekannt, Karosserieteile aus Polyamid herzustellen. Beispielhaft seien Ölwannen genannt. Federbälge für Luftfederungen insbesondere für Nutzfahrzeuge können aus Polychloropren-Kautschuk hergestellt werden. Verkleidungen im Kraftfahrzeugunterboden können aus Polypropylen bestehen, wobei aus Gründen der Kerbschlagzähigkeit und des gewünschten Elastizitätsmoduls, aber auch wegen der im Bereich des Auspuffs auftretenden hohen Temperaturen Langglasfasem enthalten sein müssen. Hergestellt werden die entsprechenden Kraftfahrzeugunterbodenverkleidungen durch Pressen oder Spritzprägen. Entsprechende Kraftfahrzeugunterbodenverkleidungen weisen eine hohe Steifigkeit auf. Nachteilig ist jedoch, dass aufgrund der vorhandenen Glasfasern bei der Nachbearbeitung der hergestellten Teile eine Gesundheitsbelastung aufgrund der anfallenden Glasfaserpartikel erwächst. Auch sind entsprechende Verkleidungen aufgrund des Glasfaseranteils nicht im gewünschten Umfang recyclebar. Werden Unterbodenverkleidungen durch Pressen hergestellt, so müssen zum Ausbilden von Schlitzen oder sonstigen Durchbrechungen zusätzlich Stanzarbeiten durchgeführt werden, wobei der Nachteil entsteht, dass am Rand Anrisse entstehen, wodurch die Lebensdauer beeinträchtigt wird. Zudem verursacht das Stanzen erhebliche Kosten, und zwar nicht nur durch den zusätzlichen Arbeitsschritt des Stanzens an sich, sondern durch die Werkzeuge selbst, da deren Kontur der des Bereichs entsprechen muss, in dem die Durchbrechung ausgestanzt werden soll, um Formveränderungen des gepressten Teils auszuschließen.

Dabei ist beim Spritzprägen der Nachteil gegeben, dass aufwendige Federmechanismen aufweisende Werkzeuge benötigt werden.

Die Verarbeitung von Glasfasern, sei es durch Beimengung in das Grundmaterial Propylen, sei es durch Umpressen von Glasfasermatten, wird jedoch nicht nur aufgrund der gewünschten Materialeigenschaften für erforderlich erachtet, sondern wegen der erforderlichen Steifigkeit der Bodenverkleidung selbst.

Aus der EP-A-1 362 886 ist eine Polymermischung zur Herstellung von Automobilteilen wie Stoßstangen bekannt, um die Lackierfähigkeit zu verbessern.

Die DE-A-198 17 567 bezieht sich auf eine Radlaufschale, die aus einem ersten aus thermoplastischen Kunststoffmaterial bestehenden Flächenbereich und einem zweiten aus textilem Kunststoffmaterial bestehenden Flächenbereich besteht, die miteinander verbunden sind. Das Kunststoffmaterial kann dabei ein Recyclat enthalten.

Der vorliegenden Erfindung liegt das Problem zu Grunde, eine Kraftfahrzeugunterbodenverkleidung sowie ein Verfahren zur Herstellung einer solchen derart weiterzubilden, dass die Vorteile in Bezug auf die Materialeigenschaften bekannter Bodenverkleidungen beibehalten, jedoch ihre Nachteile vermieden werden. Dabei sollen insbesondere ein Nachbearbeiten durch Stanzen sowie eine Gesundheitsgefährdung vermieden werden. Ferner soll eine hohe Maßgenauigkeit erzielbar sein. Das zum Herstellen der Bodenverkleidung notwendige Werkzeug soll einen einfachen Aufbau aufweisen.

Eine Verbesserung der Lärmdämmung soll erreichbar sein. Auch die Bruchfestigkeit durch Steinschlag soll erhöht werden. Preiswertes Grundmaterial zum Herstellen der Kraftfahrzeugunterbodenverkleidung soll benutzt werden können, wobei auch eine Recyclebarkeit gegeben sein soll.

Zur Lösung des Problems wird erfindungsgemäß eine Kraftfahrzeugunterbodenverkleidung der eingangs genannten Art vorgeschlagen, die sich dadurch auszeichnet, dass die Kraftfahrzeugunterbodenverkleidung ein Spritzgussteil ist, dass der Grundwerkstoff gemahlenes recyceltes glasfaserfreies Polypropylen ist, dem zumindest ein Elastomer sowie zumindest ein mineralischer Zusatzstoff als das Additiv zugegeben ist, und dass die Kraftfahrzeugunterbodenverkleidung ein Biege-Elastizitätsmodul E mit 1.000 MPa ≤ E ≤ 1.280 MPa, eine Dichte ρ mit 1,00 g/cm³ ≤ ρ ≤ 1,16 g/cm³ und/oder eine Kerbschlagzähigkeit K bei 23° C mit 25 KJ/m² ≤ K ≤ 44 KJ/m² aufweist.

Abweichend von vorbekannten Unterbodenverkleidungen und entgegen den Forderungen der Fachwelt wird als Grundmaterial ein glasfaserfreies Polypropylen verwendet, das zudem recycelt ist. Somit wird ein preiswerter Grundwerkstoff verwendet, der gespritzt wird, so dass im Vergleich z. B. zum Spritzprägen kostengünstige Werkzeuge benutzt werden können. Gleichzeitig ist sichergestellt, dass die Unterbodenverkleidung innerhalb enger Toleranzen gewünschte Materialstärken aufweist, ein Vorteil, der sich beim Pressen von Unterbodenverkleidungen nicht ergibt. Ferner wird zumindest ein Additiv wie insbesondere Talkum oder Kreide zugegeben, um die Materialeigenschaften insbesondere in Bezug auf Biege- und Elastizitätsmodul, Dichte und Kerbschlagzähigkeit so einzustellen, dass sich gleiche oder sogar bessere Eigenschaften als bei den vorbekannten Glasfasern enthaltenden Bodenverkleidungen ergeben. Dabei ist es nicht von Nachteil, dass die gespritzte Unterbodenverkleidung recht flexibel ist, also eine geringe Eigensteifigkeit aufweist, da durch die Befestigung am Kraftfahrzeug die gewünschte Maßhaltung sichergestellt ist. Allerdings ergibt sich aufgrund der Flexibilität, d. h. der Beweglichkeit der Unterbodenverkleidung der Vorteil, dass auftreffende Steirie gedämpft werden, so dass eine Geräuschminderung erfolgt.

Dabei weisen die Unterbodenverkleidungen eine vorgegebene Aerodynamik, also einen Cw-Wert derart dass unerwünschte Verwirbelungen vermieden werden.

Zwar ist es bekannt, recyceltes Polypropylen im Automobilbereich einzusetzen. Das bezeichnete Polypropylen ersetzt jedoch ausschließlich die Kraftfahrzeugteile, die ansonsten aus Originalware Polypropylen hergestellt sind, das jedoch herstellungsbedingt relativ teuer ist.

Insbesondere ist vorgesehen, dass der Polypropylengrundwerkstoff aus gemahlenem Akkumulatorkästenmaterial hergestellt ist oder dieses enthält.

Um die gewünschte Flexibilität zu erzielen, ist vorgesehen, dass das Elastomer wie insbesondere EPDM (Ethylen-Propylen-Dien-Monomer) aus Produktionsabfällen und/oder recyceltem Kraftfahrzeugmaterial besteht oder dieses enthält. Somit kann ein kostengünstiger Zusatzstoff dem ebenfalls kostengünstig zur Verfügung stehenden recycelten glasfaserfreien Polypropylen zugegeben werden, um die gewünschten Materialeigenschaften zu erzielen. Insbesondere ist als ein Additiv Kreide und/oder Talkum vorgesehen, dessen Gewichtsanteil kleiner als 3 % betragen sollte. Durch das entsprechende Additiv werden insbesondere die Kerbschlagzähigkeit und das Biegeelastizitätsmodul positiv beeinflusst. Auch ergibt sich eine gute Entformbarkeit aus dem Spritzgießwerkzeug.

Bei der Verwendung von Talkum sollte dieses einen mittleren Teilchendurchmesser d mit 0,5 µm ≤ d ≤ 15 µm, insbesondere 0,5 µm ≤ d ≤ 5 µm aufweisen.

Als weitere Kenndaten für die erfindungsgemäße Kraftfahrzeugunterbodenverkleidung sind zu nennen die Streckspannung Sp mit 12 Sp mit 12 MPa ≤ Sp ≤ 15 MPa und/oder Streckdehnung Sd mit 3 % ≤ Sd ≤ 5 % und/oder Bruchspannung Bs mit 9 MPa ≤ Bs ≤ 13 MPa und/oder Bruchdehnung Bd mit 50 % ≤ Bd ≤ 60 %. Ferner sollte die Kraftfahrzeugunterbodenverkleidung eine Härte Shore D zwischen 60 und 65 aufweisen.

Die Streckspannung, Streckdehnung, Bruchspannung wird entsprechend EN ISO 527-2 geprüft. Den Prüfmethoden für die Dichte liegt die DIN 53 479, für das Biegeelastizitätsmodul die EN ISO 178, für die Härte Shore D die DIN 53 505 (3s) und für die Kerbschlagzähigkeit die ISO 179/1eA zu Grunde.

Zur gegebenenfalls Erhöhung der Steifigkeit der Kraftfahrzeugunterbodenverkteidung ist des Weiteren vorgesehen, dass eine Strukturierung durch Hohlrippen gegeben ist, die in Tiefpunkten Öffnungen aufweisen. Hierdurch ist sichergestellt, dass sich gegebenenfalls ansammelndes Kondensat abfließen kann.

Unabhängig hiervon weist die Unterbodenverkleidung im gewünschtem Umfang Durchbrechungen wie Öffnungen oder Schlitze auf, die gleichzeitig beim Spritzen ausgebildet werden, so dass es einer Nachbearbeitung nicht bedarf.

Erfindungsgemäß wird eine Unterbodenverkleidung zur Verfügung gestellt, die denen von der Materialstärke und der Geometrie her aus glasfaserverstärktem Polypropylen entsprechen. Somit sind konstruktive Änderungen am Kraftfahrzeug selbst nicht erforderlich, um die erfindungsgemäßen Unterbodenverkleidungen zu befestigen.

Ein Verfahren zur Herstellung einer aerodynamisch ausgelegten Kraftfahrzeugunterbodenverkleidung im Wesentlichen flächiger Erstreckung mit strukturierten Bereichen zur Erhöhung der Festigkeit und/oder zum Befestigen am Kraftfahrzeug unter Verwendung von Polypropylen als Grundwerkstoff zeichnet sich durch die Verfahrensschritte aus:
- Mischen gemahlenes recyceltes glasfaserfreies Polypropylen enthaltendes Material mit zumindest einem Temperaturbeständigkeit erhöhenden Additiv,
- Compoundieren so hergestellter Mischung und
- Spritzgießen des compoundierten Materials, wobei ein einen Geometrie der Kraftfahrzeugunterbodenverkleidung vorgebender Formraum aufweisendes Werkzeug verwendet wird, dessen Innenfläche konturunabhängig auf gleiche oder im Wesentlichen gleiche Temperatur beim Spritzgießen eingestellt wird.

Erfindungsgemäß wird eine Kraftfahrzeugunterbodenverkleidung durch Spritzgießen aus recyceltem glasfaserfreien Polypropylen hergestellt, wobei ein Additiv zugegeben wird, das zur Erhöhung der Temperaturbeständigkeit führt. Somit ist ein problemloser Einsatz auch im Bereich der wärmeabgebenden Teile im Unterbodenbereich, also insbesondere auch im Bereich des Auspuffs möglich.

Um eine hinreichende Maßgenauigkeit sicherzustellen, ist erfindungsgemäß des Weiteren vorgesehen, dass der Formraum des Werkzeuges innenflächenseitig auf gleiche oder nahezu gleiche Temperatur eingestellt wird, so dass im gewünschten Umfang ein Fließen des plastifizierten zumindest das eine Additiv enthaltende Polypropylenmaterial sichergestellt ist und infolgedessen auch vorgegebenen Materialstärken eingehalten werden können. Dabei ist insbesondere vorgesehen, dass das Werkzeug in Sektoren unterteilt wird, die unabhängig voneinander temperiert werden, um das gewünschte Temperaturprofil sicherzustellen.

Des Weiteren zeichnet sich die Erfindung aus durch die Verwendung von recyceltem Polypropylenmaterial mit zumindest einem Materialeigenschaften beeinflussenden Additiv zum Herstellen einer aerodynamisch ausgelegten glasfaserfreien Kraftfahrzeugunterbodenverkleidung mittels Spritzgießen. Dabei wird als das Polypropylenmaterial insbesondere gemahlenes Akkumulatorengehäusematerial verwendet. Als Additiv kann Talkum und/oder Kreide verwendet werden. Zusätzlich kann Glimmer oder ein sonstiger Wärmestabilisator als Additiv verwendet werden, um die Hitzebeständigkeit zu verbessern.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

Es zeigen:
- Fig. 1: eine Draufsicht auf eine Kraftfahrzeugunterbodenverkleidung,
- Fig. 2: einen Schnitt entlang der Linie A-A in Fig. 1 und
- Fig. 3: einen Schnitt entlang der Linie B-B in Fig. 1.

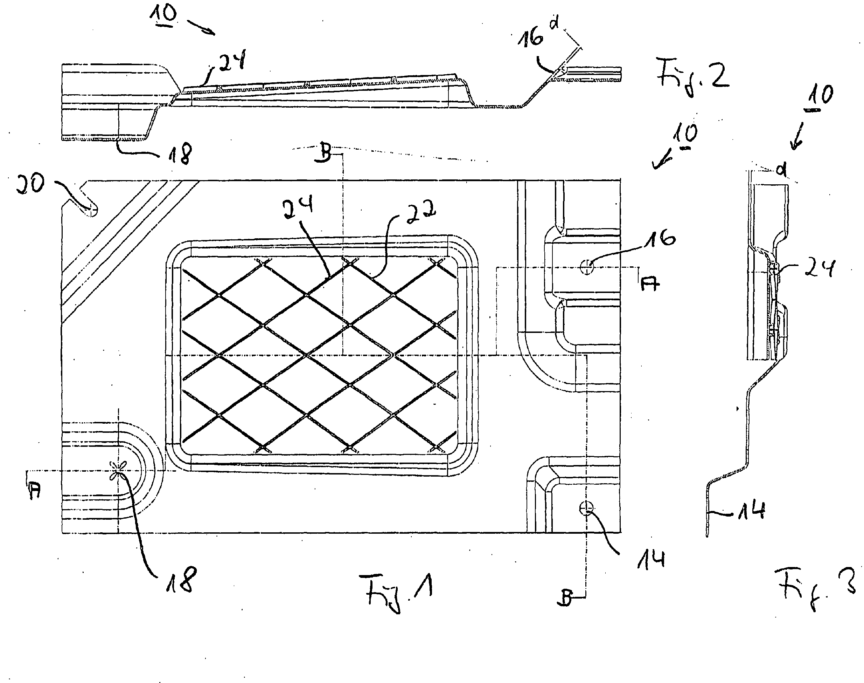

In den Figuren ist rein prinzipiell eine Kraftfahrzeugunterbodenverkleidung 10 dargestellt, die ein im Wesentlichen flächiges Element ist. Die Unterbodenverkleidung 10 weist eine in Draufsicht rechteckförmige Geometrie auf, wobei in Eck- oder Außenrandbereichen Durchbrechungen 14, 16, 18 bzw. Schlitze 20 vorhanden sind, um die Unterbodenverkleidung 10 am Boden eines Kraftfahrzeuges zu befestigen. Ferner sind im Mittenbereich stegartige Rippen 22, 24 vorgesehen, um eine gewünschte Steifigkeit zu erzielen. Ansonsten ist die Geometrie der Unterbodenverkleidung 10 der des Unterbodens des zu verkleidenden Kraftfahrzeugs bzw. der entlang des Unterbodens verlaufenden Einbauten des Kraftfahrzeuges wie Auspuff angepasst.

Die entsprechende in den Figuren rein prinzipiell dargestellte Unterbodenverkleidung 10 weist z. B. eine Dicke d von 2 mm auf, die flächige Erstreckung kann 1400 x 800 mm² betragen. Die Unterbodenverkleidung 10 wird durch Spritzgießen hergestellt, wobei als Grundwerkstoff gemahlenes recyceltes glasfaserfreies Polypropylen verwendet wird. Hierbei kann es sich um recyceltes Akkumulatorenkästenmaterial handeln. Dem Grundwerkstoff ist als Additiv Talkum mit 2,8 Gew.-% und Glimmer mit 1 Gew.-% zugegeben. Hierdurch bedingt werden die Materialeigenschaften der Unterbodenverkleidung 10 im Vergleich zu solchen verbessert, die aus glasfaserverstärktem Polypropylen bzw. umpressten Glasfasermatten bestehen.

Die Stege bzw. Versteifungsrippen 22, 24 verlaufen insbesondere innenseitig, so dass diese zu Verwirbelungen nicht führen können. Folglich wird durch die Versteifungen der Cw-Wert einer entsprechenden Unterbodenverkleidung im Vergleich zu bekannten nicht verschlechtert.

## Patentansprüche

1. Kraftfahrzeugunterbodenverkleidung (10) im Wesentlichen flächiger Erstreckung mit strukturierten Bereichen zur Erhöhung der Festigkeit und/oder zum Befestigen am Kraftfahrzeug, wobei Grundwerkstoff der Unterbodenverkleidung Polypropylen ist, dem zumindest ein Dichte, Biege-Elastizitätsmodul und/oder Kerbschlagzähigkeit der Unterbodenverkleidung beeinflussendes Additiv zugegeben ist,
**dadurch gekennzeichnet,**
**dass** die Kraftfahrzeugunterbodenverkleidung (10) ein Spritzgussteil ist, dass der Grundwerkstoff gemahlenes recyceltes glasfaserfreies Polypropylen ist, dem zumindest ein Elastomer sowie zumindest ein mineralischer Zusatzstoff als das Additiv zugegeben ist, und dass die Kraftfahrzeugunterbodenverkleidung ein Biege-Elastizitätsmodul E mit 1.000 MPa ≤ E ≤ 1.280 MPa, eine Dichte ρ mit 1,00 g/cm³ ≤ ρ ≤ 1,16 g/cm³ und/oder eine Kerbschlagzähigkeit K bei 23° C mit 25 KJ/m² ≤ K ≤ 44 KJ/m² aufweist.

2. Kraftfahrzeugunterbodenverkleidung nach Anspruch 1,
**dadurch gekennzeichnet,**
**dass** der Polypropylengrundwerkstoff aus gemahlenem Akkumulatorenkästenmaterial hergestellt ist oder dieses enthält.

3. Kraftfahrzeugunterbodenverkleidung nach Anspruch 1 oder 2,
**dadurch gekennzeichnet,**
**dass** das Elastomer wie insbesondere EPDM aus Produktionsabfällen und/oder recyceltem Kraftfahrzeugmaterial besteht oder dieses ist.

4. Kraftfahrzeugunterbodenverkleidung nach zumindest einem der vorhergehenden Ansprüche,
**dadurch gekennzeichnet,**
**dass** als Additiv Kreide und/oder Talkum enthalten ist.

5. Kraftfahrzeugunterbodenverkleidung nach zumindest einem der vorhergehenden Ansprüche,
**dadurch gekennzeichnet,**
**dass** der Anteil an Kreide und/oder Talkum ≤ 3 Gew.-% beträgt.

6. Kraftfahrzeugunterbodenverkleidung nach zumindest einem der vorhergehenden Ansprüche,
**dadurch gekennzeichnet,**
**dass** fein gemahlenes Talkum mit einem mittleren Teilchendurchmesser d mit 0,5 µm ≤ d ≤ 15 µm, insbesondere 0,5 µm ≤ d ≤ 5 µm als Additiv zugegeben ist.

7. Kraftfahrzeugunterbodenverkleidung nach zumindest einem der vorhergehenden Ansprüche,
**dadurch gekennzeichnet**
**dass** die Unterbodenverkleidung (10) durch eine Streckspannung Sp mit 12 MPa ≤ Sp ≤ 15 MPa und/oder eine Streckdehnung Sd mit 3 % ≤ Sd ≤ 5 % und/oder eine Bruchspannung Bs mit 9 MPa ≤ Bs ≤ 13 MPa und/oder eine nom. Bruchdehnung Bd mit 50 % ≤ Bd ≤ 60 % gekennzeichnet ist.

8. Kraftfahrzeugunterbodenverkleidung nach zumindest einem der vorhergehenden Ansprüche,
**dadurch gekennzeichnet,**
**dass** die Kraftfahrzeugunterbodenverkleidung (10) eine Härte Shore D zwischen 60 und 65 aufweist.

9. Kraftfahrzeugunterbodenverkleidung nach zumindest einem der vorhergehenden Ansprüche,
**dadurch gekennzeichnet,**
**dass** die Kraftfahrzeugunterbodenverkleidung (10) eine Kerbschlagzähigkeit K₁ bei -30° mit 3 KJ/m² ≤ K₁ ≤ 8 KJ/m² aufweist.

10. Kraftfahrzeugunterbodenverkleidung nach zumindest einem der vorhergehenden Ansprüche,
**dadurch gekennzeichnet,**
**dass** die Kraftfahrzeugunterbodenverkleidung (10) durch Hohlrippen (22,24) strukturiert ist, die in Tiefpunkten Öffnungen aufweisen.

11. Kraftfahrzeugunterbodenverkleidung nach zumindest einem der vorhergehenden Ansprüche,
**dadurch gekennzeichnet,**
**dass** die Kraftfahrzeugunterbodenverkleidung (10) Durchbrechungen (14, 16, 18, 20) wie Öffnungen oder Schlitze aufweist, die beim Spritzen ausgebildet sind.

12. Verfahren zur Herstellung einer aerodynamisch ausgelegten Kraftfahrzeugunterbodenverkleidung nach zumindest Anspruch 1, wobei die Kraftfahrzeugunterbodenverkleidung im Wesentlichen flächiger Erstreckung mit strukturierten Bereichen zur Erhöhung der Festigkeit und/oder zum Befestigen am Kraftfahrzeug unter Verwendung von Polypropylen als Grundwerkstoff,
**gekennzeichnet durch**
die Verfahrensschritte
- Mischen gemahlenes recyceltes glasfaserfreies Polypropylen enthaltendes Material mit zumindest einem Temperaturbeständigkeit erhöhenden Additiv,
- Compoundieren so hergestellter Mischung und
- Spritzgießen des compoundierten Materials, wobei ein einen Geometrie der Kraftfahrzeugunterbodenverkleidung vorgebender Formraum aufweisendes Werkzeug verwendet ist, dessen Innenfläche konturunabhängig auf gleiche oder im Wesentlichen gleiche Temperatur beim Spritzgießen eingestellt wird.

13. Verfahren nach Anspruch 12,
**dadurch gekennzeichnet,**
**dass** das Werkzeug in Sektoren unterteilt wird, die unabhängig voneinander temperiert werden.

14. Verwendung recycelten Polypropylenmaterials mit zumindest einem Materialeigenschaften beeinflussenden Additiv zum Herstellen eines im Bodenbereich eines Kraftfahrzeugs angeordneten durch Spritzgießen hergestellten Bauteils,
**dadurch gekennzeichnet,**
**dass** das Bauteil eine aerodynamisch ausgelegte glasfaserfreie Kraftfahrzeugunterbodenverkleidung nach zumindest Anspruch 1 ist.

15. Verwendung nach Anspruch 14, wobei gemahlenes Akkumulatorengehäusematerial das Polypropylenmaterial ist.

16. Verwendung nach Anspruch 13, wobei Talkum und/oder Kreide das Additiv ist.

17. Verwendung nach Anspruch 14 oder 15, wobei Glimmer das Additiv oder ein zusätzliches Additiv ist.

## Claims

1. Vehicle underbody panel (10) of substantially plane extent with structured areas for increasing its strength and/or for fastening to the vehicle, where the basic material of the underbody panel is polypropylene, to which is admixed at least one additive affecting density, flexural modulus and/or notch impact strength of the underbody panel,
**wherein**
the vehicle underbody panel (10) is an injection moulded part, wherein the basic material is ground, recycled and glass-fibre-free polypropylene to which is admixed at least one elastomer and at least one mineral material as the additive, and wherein the vehicle underbody panel has a flexural modulus E of 1000 MPa ≤ E ≤ 1280 MPa, a density ρ of 1.00 g/cm³ ≤ ρ ≤ 1.16 g/cm³ and/or a notch impact strength K at 23°C of 25 KJ/m² ≤ K ≤ 44 KJ/m².

2. Vehicle underbody panel according to Claim 1,
**wherein**
the polypropylene basic material is made of or contains ground battery case material.

3. Vehicle underbody panel according to Claim 1 or Claim 2,
**wherein**
the elastomer such as EPDM in particular contains or is production waste and/or recycled vehicle material.

4. Vehicle underbody panel according to at least one of the previous claims,
**wherein**
chalk and/or talcum powder is contained as the additive.

5. Vehicle underbody panel according to at least one of the previous claims,
**wherein**
the proportion of chalk and/or talcum powder is ≤ 3% by weight.

6. Vehicle underbody panel according to at least one of the previous claims,
**wherein**
finely ground talcum powder with a mean particle diameter d of 0.5 µm ≤ d ≤ 15 µm, in particular 0.5 µm ≤ d ≤ 5 µm, is admixed as an additive.

7. Vehicle underbody panel according to at least one of the previous claims,
**wherein**
the underbody panel (10) is **characterized by** a yield stress Sp of 12 MPa ≤ Sp ≤ 15 MPa and/or a tensile strain at yield Sd of 3% ≤ Sd ≤ 5 % and/or a tensile stress at break Bs of 9 MPa ≤ Bs ≤ 13 MPa and/or a nominal tensile strain at break Bd of 50% ≤ Bd ≤ 60%.

8. Vehicle underbody panel according to at least one of the previous claims,
**wherein**
the vehicle underbody panel (10) has a Shore D hardness between 60 and 65.

9. Vehicle underbody panel according to at least one of the previous claims,
**wherein**
the vehicle underbody panel (10) has a notch impact strength K₁ at -30° of 3 KJ/m² ≤ K₁ ≤ 8 KJ/m².

10. Vehicle underbody panel according to at least one of the previous claims,
**wherein**
the vehicle underbody panel (10) is structured by hollow ribs (22, 24) having openings at low points.

11. Vehicle underbody panel according to at least one of the previous claims,
**wherein**
the vehicle underbody panel (10) has cutouts (14, 16, 18, 20) such as openings or slots formed during injection moulding.

12. Process for manufacture of an aerodynamically designed vehicle underbody panel according to at least Claim 1, where the vehicle underbody panel is of substantially plane extent with structured areas for increasing its strength and/or for fastening to the vehicle using polypropylene as the basic material,
**characterized by**
the process steps
- mixing of ground, recycled and glass-fibre-free material containing polypropylene with at least one additive increasing temperature resistance,
- compounding of the mixture thus manufactured and
- injection moulding of the compounded material, where a mould is used having a shaped area determining the geometry of the vehicle underbody panel and having an inner surface adjusted to the same or substantially the same temperature during injection moulding regardless of the contour.

13. Process according to Claim 12,
**wherein**
the mould is subdivided into sectors of which the temperature is controlled independently of one another.

14. Use of recycled polypropylene material with at least one additive affecting material properties for manufacture of a component arranged in the underbody area of a vehicle and made by injection moulding,
**wherein**
the component is an aerodynamically designed and glass-fibre-free vehicle underbody panel according to at least Claim 1.

15. Use according to Claim 14, where ground battery case material is the polypropylene material.

16. Use according to Claim 14, where talcum powder and/or chalk is the additive.

17. Use according to Claim 14 or Claim 15, where mica is the additive or an additional additive.

## Revendications

1. Revêtement de dessous de caisse de véhicule (10) s'étendant essentiellement à plat avec sections structurées pour une meilleure rigidité et/ou pour la fixation sur le véhicule, sachant que le matériau de base du revêtement de dessous de caisse est du polypropylène auquel est ajouté au moins un additif influençant l'épaisseur, le module d'élasticité de flexion et/ou la résilience du revêtement de dessous de caisse,
**caractérisé en ce**
**que** le revêtement de dessous de caisse de véhicule (10) est une pièce moulée par injection, que le matériau de base est du polypropylène broyé recyclé sans fibre de verre auquel sont ajoutés au moins un élastomère ainsi qu'au moins un additif minéral, et que le revêtement de dessous de caisse de véhicule présente un module d'élasticité de flexion E de 1 000 MPa ≤ E ≤ 1 280 MPa, une masse volumique ρ de 1,00 g/cm³ ≤ ρ ≤ 1,16 g/cm³ et/ou une résilience K à 23° C de 25 KJ/m² ≤ K ≤ 44 KJ/m².

2. Revêtement de dessous de caisse de véhicule selon la revendication 1,
**caractérisé en ce**
**que** le matériau de base en polypropylène est fabriqué à partir d'un matériau de bac d'accumulateur broyé ou en contient.

3. Revêtement de dessous de caisse de véhicule selon la revendication 1 ou 2,
**caractérisé en ce**
**que** l'élastomère, tel qu'en particulier de l'EPDM, est composé de déchets de production et/ou de matériel automobile recyclé ou en est.

4. Revêtement de dessous de caisse de véhicule selon au moins une des revendications précédentes,
**caractérisé en ce**
**qu'**il contient de la craie et/ou du talc en tant qu'additif.

5. Revêtement de dessous de caisse de véhicule selon au moins une des revendications précédentes,
**caractérisé en ce**
**que** la part de craie et/ou de talc s'élève à 3 % pondéral.

6. Revêtement de dessous de caisse de véhicule selon au moins une des revendications précédentes,
**caractérisé en ce**
**qu'**est ajouté, en tant qu'additif, du talc finement moulu dont la taille moyenne des particules d est de 0,5 µm ≤ d ≤ 15 µm, en particulier de 0,5 µm ≤ d ≤ 5 µm.

7. Revêtement de dessous de caisse de véhicule selon au moins une des revendications précédentes,
**caractérisé en ce**
**que** le revêtement de dessous de caisse de véhicule (10) se distingue par un effort de tension Sp de 12 MPa ≤ Sp ≤ 15 MPa et/ou par un allongement Sd de 3 % ≤ Sd ≤ 5 % et/ou par une tension de rupture Bs de 9 MPa ≤ Bs ≤ 13 MPa et/ou un allongement à la rupture nominal Bd de 50 % ≤ Bd ≤ 60 %.

8. Revêtement de dessous de caisse de véhicule selon au moins une des revendications précédentes,
**caractérisé en ce**
**que** le revêtement de dessous de caisse de véhicule (10) présente une dureté Shore D comprise entre 60 et 65.

9. Revêtement de dessous de caisse de véhicule selon au moins une des revendications précédentes,
**caractérisé en ce**
**que** le revêtement de dessous de caisse de véhicule (10) présente un résilience K₁ à -30° de 3 KJ/m² ≤ K₁ ≤ 8 KJ/m².

10. Revêtement de dessous de caisse de véhicule selon au moins une des revendications précédentes,
**caractérisé en ce**
**que** le revêtement de dessous de caisse de véhicule (10) est structuré par des nervures évidées (22, 24) qui présentent des ouvertures aux points les plus profonds.

11. Revêtement de dessous de caisse de véhicule selon au moins une des revendications précédentes,
**caractérisé en ce**
**que** le revêtement de dessous de caisse de véhicule (10) présente des percées (14, 16, 18, 20) telles que des orifices ou des fentes qui sont formées lors de l'injection.

12. Procédé de fabrication d'un revêtement de dessous de caisse de véhicule à conception aérodynamique selon au moins la revendication 1, sachant que le revêtement de dessous de caisse de véhicule s'étend essentiellement à plat et présente des sections structurées pour une meilleure rigidité et/ou pour la fixation sur le véhicule, le polypropylène étant utilisé comme matériau de base,
**caractérisé par**
les étapes de procédé suivantes :
- mélange d'un matériau contenant du polypropylène broyé recyclé sans fibre de verre avec au moins un additif augmentant la résistance à chaud,
- compoundage du mélange ainsi fabriqué et
- moulage par injection du matériau compoundé, sachant qu'est utilisé un outil présentant un moule correspondant à la géométrie du revêtement de dessous de caisse de véhicule, outil dont la surface interne est, indépendamment des contours, réglée à une température identique ou pour l'essentiel identique lors du moulage par injection.

13. Procédé selon la revendication 12,
**caractérisé en ce**
**que** l'outil est divisé en secteurs qui sont tempérés indépendamment les uns des autres.

14. Utilisation de matériau en polypropylène recyclé avec au moins un additif influençant les caractéristiques du matériau pour la fabrication d'une pièce produite par moulage par injection et disposée sur le plancher d'un véhicule,
**caractérisée en ce**
**que** la pièce est un revêtement de dessous de caisse de véhicule sans fibre de verre à conception aérodynamique selon au moins la revendication 1.

15. Utilisation selon la revendication 14, sachant que le matériau en polypropylène est un matériau de bacs d'accumulateur broyé.

16. Utilisation selon la revendication 13, sachant que l'additif est de la craie et/ou du talc.

17. Utilisation selon la revendication 14 ou 15, sachant que du mica constitue l'additif ou un additif supplémentaire.
